# FASCICULE DE BREVET EUROPEEN

(11) **EP 0 844 816 B1**
(45) Date de publication et mention de la délivrance du brevet: **06.10.1999**
(21) Numéro de dépôt: 96927089.1
(22) Date de dépôt: 26.07.1996
(51) Int. Cl.: A01K 11/00, G09F 3/02

(54) **DISPOSITIF POUR IDENTIFIER LES ANIMAUX D'ANIMAUX D'ELEVAGE SOUMIS A UN TRAITEMENT VETERINAIRE**
KENNZEICHNUNGSVORRICHTUNG FÜR ZUCHTTIERE, DIE EINER TIERÄRZTLICHEN BEHANDLUNG UNTERWORFEN SIND
DEVICE FOR IDENTIFYING LIVESTOCK UNDERGOING VETERINARY TREATMENT

(30) Priorité: 27.07.1995 FR 9509391; 02.11.1995 FR 9513173
(43) Date de publication de la demande: 03.06.1998
(73) Titulaire: Serieys, Francis, 35650 Le Rheu (FR)
(72) Inventeur: Serieys, Francis, 35650 Le Rheu (FR)
(86) Numéro de dépôt international: FR9601182
(87) Numéro de publication internationale: WO9704644

(56) Documents cités:
- EP-A- 0 231 421
- WO-A-95/14375
- GB-A- 1 156 674
- GB-A- 2 248 540
- US-A- 4 574 742

## Description

La présente invention concerne un dispositif pour identifier les animaux soumis à un traitement vétérinaire, guider l'application des protocoles thérapeutiques et contrôler l'écoulement des délais d'attente.

Pour être efficaces sans entraîner de concentrations excessives de résidus dans les denrées alimentaires d'origine animale, les médicaments vétérinaires doivent être administrés conformément aux protocoles d'utilisation pour lesquels ils ont obtenu l'Autorisation ce Mise sur le Marché (nombre d'injections, doses, intervalles entre injections...) et des délais d'attente réglementaires, spécifiques à chaque spécialité, doivent être respectés après la dernière administration.

Actuellement, il est conseillé aux éleveurs de poser un bracelet, un ruban ou encore une marque de peinture sur le corps des animaux en cours de traitement de façon à pouvoir les distinguer du reste du troupeau, et de noter sur un carnet, un tableau ou un registre toutes les informations dont ils ont besoin pour conduire correctement chacun des traitements en cours, notamment la spécialité utilisée, la date de début de traitement, le nombre et la fréquence des administrations, la durée du délai d'attente et le moment ou' la production ce l'animal peut être à nouveau livrée.

Cette procédure présente des inconvénients majeurs qui la rende peu opérationnelle. Tout d'abord, la difficulté pour une majorité d'éleveurs d'effectuer des enregistrements écrits sur le lieu et dans les conditions de leur activité, conduit à de nombreuses omissions et erreurs. Ensuite, le temps nécessaire à l'éleveur pour retrouver ces enregistrements au moment où il doit intervenir sur un animal, est souvent peu compatible avec les cadences de travail, notamment en salle de traite. Il en résulte des confusions dans la conduite des traitements et des erreurs sur les délais d'attente d'autant plus fréquentes que les protocoles thérapeutiques sont plus complexes, les effectifs d'animaux plus importants et la charge de travail des éleveurs plus lourde.

Pour remédier à ces inconvénients sans recourir à des systèmes électroniques onéreux, il serait souhaitable de rendre inutiles les enregistrements écrits que l'éleveur doit aujourd'hui effectuer et de rassembler toute l'information nécessaire à la réalisation correcte d'un traitement et au respect du délai d'attente sur un support unique se fixant sur une partie du corps de l'animal aisément accessible par l'éleveur au moment et dans les conditions où il doit intervenir. Dans la plupart des élevages, notamment de vaches laitières, seule la partie arrière du corps et plus particulièrement les membres postérieurs répondent à ces conditions d'accessibilité. Toutefois, le contact prolongé de ces régions anatomiques avec les sols et les litières lors du couchage, leurs mouvements incessants lors de la marche, rendent difficiles la tenue de dispositifs de taille suffisante pour présenter les informations nécessaires sous une forme immédiatement compréhensible et utilisable par l'éleveur.

Un dispositif supportant des informations zootechniques et se fixant sur la queue des vaches a été décrit (document US, A, 4574742) mais il est dépourvu de moyens ce contrôle d'une suite d'opérations de traitement.

On connaît un dispositif (document WO, A, 9514375) constitué d'une sangle dont les bords crénelés forment de petites languettes en saillie, de forme trapèzoïdale, que l'opérateur doit déchirer par arrachage après réalisation de chacune des opérations indiquées. Constitué d'une seule pièce dans un matériau unique et dépourvu de moyens ce désolaridarisation des languettes, ce dispositif est par sa conception peu opérationnel : si la sangle est très résistante de façon à éviter la perte du dispositif en cours d'utilisation, les languettes sont alors très difficiles à arracher et l'opérateur ne peut maîtriser l'ampleur et la direction de la déchirure qu'il réalise ; si au contraire les languettes peuvent s'arracher facilement, la sangle est alors fragile et les vaches perdent souvent le dispositif en cours d' utilisation. En outre, la taille réduite des languettes les rend difficiles à saisir par l'opérateur qui veut les arracher et limite la lisibilité des informations qu'elles supportent ; leur forme trapézoïdale détermine des anfractuosités dans le dispositif favorisant son accrochage à des éléments fixes de l'environnement et l'arrachage accidentel de languettes ou de la totalité du dispositif.

Le dispositif selon l'invention permet de répondre à ces exigences. Il est en effet constitué de deux pièces distinctes qui sont assemblées, d'une part une bande de fixation résistante munie à ses extrémités de moyens de fermeture et d'ouverture d'autre part une étiquette légère réalisée dans une matière difficilement déchirable qui comporte des lignes de perforation disposées parallèlement à la bande de fixation selon lesquelles des coupons rectangulaires peuvent être détachés par l'opérateur.

La couleur et les inscriptions imprimées telles que pictogrammes, chiffres et lettres, sur les coupons rectangulaires indiquent chacune des opérations à effectuer du début du traitement jusqu'à la fin du délai d'attente. Les coupons rectangulaires sont disposés dans un ordre correspondant à la succession dans le temps des différentes opérations du protocole d'emploi de la spécialité. Le nom de la spécialité médicamenteuse et des informations complémentaires sur son mode d'emploi et ses caractéristiques sont imprimés sur des parties non amovibles de l'étiquette. Avant utilisation, l'étiquette est logée, éventuellement pliée, dans l'emballage de la spécialité.

Lorsque le vétérinaire, l'éleveur ou tout autre opérateur initie un traitement, il fixe l'étiquette autour d'un membre postérieur de l'animal grâce à la bande de fixation. Ensuite, l'éleveur ou tout autre opérateur chargé de poursuivre le traitement, enlève au fur et à mesure qu'il effectue les opérations successives du protocole, les éléments amovibles correspondants. L'ensemble du dispositif est déposé après l'enlèvement du dernier élément amovible qui correspond à la fin du délai d'attente. Le dispositif constitue donc un moyen d'identification de l'animal traité, de guidance de mise en oeuvre et de contrôle de réalisation du traitement, qui est immédiatement accessible à l'éleveur et ne nécessite aucun enregistrement écrit de sa part. L'étiquette comporte néanmoins des zones d'enregistrement où des inscriptions manuscrites peuvent être portées, permettant l'enregistrement éventuel d'informations complémentaires.

L'étiquette est réalisée dans une matière légère, difficilement déchirable, imperméable et sur laquelle il est possible d'imprimer et de porter, avec les marqueurs et stylos à bille usuels, des inscriptions indélébiles.

Selon l'animal de destination, la spécialité considérée, le protocole d'utilisation et le délai d'attente correspondants, la réalisation du dispositif comporte des variantes quant aux dimensions, formes, matières et disposition de ses différents composants.

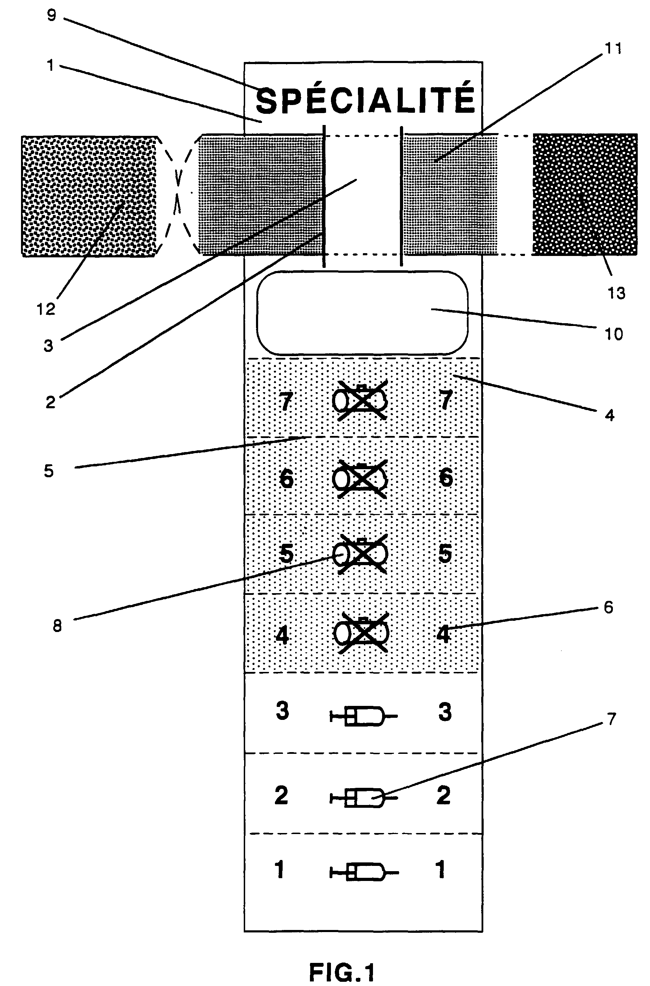

Le dessin annexé (figure 1) illustre l'invention pour le cas particulier d'un médicament destiné aux vaches laitières qui s'administre par injection intramammaire à 3 traites successives avec un délai d'attente de 4 traites supplémentaires. Le dispositif qui est représenté avant sa pose sur l'animal, doit dans cet exemple être fixé autour d'un membre postérieur de l'animal traité, dans la partie médiane du canon.

En référence à ce dessin, le dispositif comporte 2 composants principaux :
- une étiquette (1) de forme rectangulaire, présentant dans sa partie supérieure deux fentes longitudinales (2) qui délimitent un passant (3) permettant son assemblage et son désassemblage réversibles avec la bande de fixation (11).
   L'étiquette comporte une série de 7 éléments amovibles constitués par des coupons détachables (4) le long de lignes de perforation (5) disposées parallèlement au bord supérieur de l'étiquette (1) et à la bande de fixation (11). Ces coupons portent un numéro imprimé (6) de 1 à 7 en partant du bas de l'étiquette. Les trois premiers coupons qui correspondent à la phase d'administration du médicament, se distinguent par leur couleur et par un pictogramme (7) imprimé symbolisant l'injection à réaliser. Les trois coupons suivants qui correspondent au délai d'attente à respecter après la dernière injection, sont d'une autre couleur avec un pictogramme imprimé différent (8) symbolisant la mise à l'écart du lait de l'animal. Le nom de la spécialité (9) est imprimé sur la partie supérieure de l'étiquette qui comporte également une zone d'enregistrement (10) où il est possible d'inscrire avec un marqueur à encre indélébile ou un stylo à bille usuel des informations complémentaires relatives au traitement, comme par exemple le quartier traité.
- une bande de fixation (11), passée dans le passant (3) de l'étiquette, comportant à ses deux extrémités les parties mâle (12) et femelle (13) d'un ruban auto-agrippant qui constitue un système d'ouverture et de fermeture réversibles à usage multiple. Lorsque le dispositif est déposé à l'issue du délai d'attente, la bande de fixation peut être récupérée pour de nouvelles utilisations.

A titre indicatif pour cette application, l'étiquette (1) sera réalisée dans une matière comme TYVEK (marque déposée) ou un P.V.C. indéchirable. Elle aura des dimensions de l'ordre de 20 cm de long sur 6 cm de large avec un passant de 4 cm de haut sur 2 cm de large et des coupons détachables d'environ 2 cm de haut.

La bande de fixation aura des dimensions de l'ordre de 3 cm de large sur 30 cm de long. Un ruban auto-agrippant de type VELCRO (marque déposée) peut convenir.

Selon des modes particuliers de réalisation :
- l'étiquette peut être munie d'une boucle comme moyen d'assemblage et de désassemblage réversibles avec la bande de fixation.
- la bande de fixation et l'étiquette peuvent constituer 2 pièces distinctes solidarisées par des moyens d'assemblage irréversibles tels que collage, rivetage, agrafage. Dans ce cas, l'ensemble du dispositif est à usage unique.
- la bande de fixation peut être munie à ses extrémités de boucles et crochets ou des pièces d'un fermoir constituant un système de fermeture et d'ouverture réversibles à usage multiple.
- la bande de fixation peut être élastique.

Le dispositif selon l'invention est particulièrement destiné à être incorporé dans les boîtes et autres emballages de spécialités vétérinaires.

## Revendications

1. Dispositif pour identifier les animaux d'élevage soumis à un traitement vétérinaire, guider l'application du protocole thérapeutique et contrôler l'écoulement du délai d'attente, se fixant sur un membre de l'animal et comportant une série d'éléments amovibles correspondant aux opérations à réaliser, caractérisé en ce qu'il est constitué de deux pièces distinctes qui sont assemblées, d'une part une bande de fixation (11) résistante munie à ses extrémités de moyens de fermeture et d'ouverture (12, 13), d'autre part une étiquette (1) légère réalisée dans une matière difficilement déchirable qui comporte des lignes de perforation (5) disposées parallèlement à la bande de fixation (11) selon lesquelles des coupons rectangulaires (4) peuvent être détachés par l'opérateur.

2. Dispositif selon la revendication 1 caractérisé en ce que l'étiquette (1), à usage unique et spécifique d'une spécialité vétérinaire, comporte des moyens d'assemblage réversible (2,3) avec la bande de fixation (11).

3. Dispositif selon la revendication 2 caractérisé en ce que les moyens d'assemblage réversible de l'étiquette avec la bande de fixation sont constitués par des fentes longitudinales (2) pratiquées dans l'étiquette formant passants (3) dans lesquels la bande de fixation (11) est glissée.

4. Dispositif selon l'une quelconque des revendications précédentes caractérisé en ce que l'étiquette (1) est logée, éventuellement pliée, dans la boîte d'emballage de la spécialité vétérinaire correspondante.

5. Dispositif selon l'une quelconque des revendications précédentes caractérisé en ce que la bande de fixation (11) est munie à ses extrémités de moyens de fermeture et d'ouverture à usage multiple (12,13).

6. Dispositif selon la revendication 5 caractérisé en ce que les moyens de fermeture et d'ouverture à usage multiple aux extrémités de la bande de fixation (11) sont constitués par les parties mâle et femelle (12, 13) d'un ruban auto-agrippant.

7. Dispositif selon l'une quelconque des revendications précédentes caractérisé en ce que la bande de fixation (11) est élastique.

8. Dispositif selon l'une quelconque des revendications précédentes caractérisée en ce que des couleurs et des inscriptions (6,7,8, 9) sont imprimés sur l'étiquette (1).

9. Dispositif selon l'une quelconque des revendications précédentes caractérisé en ce que l'étiquette (1) comporte des zones d'enregistrement (10) où des inscriptions manuscrites peuvent être portées avec les marqueurs et stylos à bille usuels.

## Claims

1. Device to identify farm animals subjected to a veterinary treatment, to guide application of the therapeutic protocol and to check passage of the withdrawal time, that is attached to one of the animal's legs and comprises a series of removable elements corresponding to operations to be carried out, characterized in that it consists of two distinct parts which are assembled together, firstly a strong attachment strip (11) fitted at its ends with closing and opening means (12, 13), secondly a lightweight label (1) made of a material that is difficult to tear and which has perforation lines (5) parallel to the attachment strip (11) along which the operator can detach rectangular coupons (4).

2. Device according to claim 1 characterized in that the single-use label (1) specific to a veterinary patent medicine, comprises a reversible assembly means (2, 3) with the attachment strip (11).

3. Device according to claim 2 characterized in that the reversible assembly means of the label with the attachment strip consists of longitudinal slits (2) in the label forming keepers (3) through which the attachment strip (11) is slipped.

4. Device according to any one of the previous claims characterized in that the label (1) is placed, possible after folding, in the packaging box of the corresponding veterinary patent medicine.

5. Device according to any one of the previous claims characterized in that the attachment strip (11) is fitted at its ends with multiple-use closing and opening means (12,13).

6. Device according to claim 5 characterized in that the multiple-use closing and opening means at the ends of the attachment strip (11) consist of the male and female parts (12, 13) of a self-gripping ribbon.

7. Device according to any one of the previous claims characterized in that the attachment strip (11) is elastic.

8. Device according to any one of the previous claims characterized in that colors and inscriptions (6,7,8, 9) are printed on the label (1).

9. Device according to any one of the previous claims characterized in that the label (1) comprises areas (10) in which handwritten information can be recorded with standard markers and ball point pens.

## Patentansprüche

1. Vorrichtung zur Kennzeichnung von Zuchttieren, die einer tierärztlichen Behandlung unterworfen sind, als Leitfaden für die Anwendung der therapeutischen Vorschriften sowie zur Kontrolle für die Einhaltung der Wartefristen, die an einem Körperglied des Tieres befestigt wird und eine Reihe austauschbarer Elemente umfaßt, welche den jeweils durchzuführenden Behandlungsschritten entsprechen, und für die charakteristisch ist, daß sie aus zwei verschiedenen Einzelteilen besteht, die zusammengesetzt werden und zwar zum einen aus einem widerstandsfähigen Befestigungsband (11), das an beiden Enden mit einer Verschluß- bzw. Öffnungsvorrichtung ausgestattet ist (12,13), und zum anderen aus einer leichten Etikette (1) aus reißfestem Material mit Perforationsreihen parallel zur Oberkante der Etikette (1) und zum Befestigungsband (11), denen entsprechend rechteckige Abschnitte (4) von der behandelnden Person ausgelöst werden können.

2. Vorrichtung entsprechend der Anforderung unter Punkt 1, die sich dadurch auszeichnet, daß die Etikette (1), die ausschließlich einer einzigen und spezifischen tierärztlichen Arzneimittelspezialität vorbehalten bleibt, so mit dem Befestigungsband (11) verbunden wird (2,3), daß sie wieder abgelöst werden kann.

3. Vorrichtung entsprechend der Anforderung unter Punkt 2, die sich dadurch auszeichnet, daß die reversible Verbindung mit dem Befestigungsband aus länglichen Schlitzen (2) in der Etikette selbst besteht, welche Schlaufen (3) ausbilden, durch die das Befestigungsband (11) gezogen wird.

4. Vorrichtung gemäß einer beliebigen vorangehenden Anforderung, die sich dadurch auszeichnet, daß die Etikette (1), eventuell zusammengefaltet, in der Verpackung der jeweiligen tierärztlichen Arzneimittelspezialität aufbewahrt wird.

5. Vorrichtung gemäß einer beliebigen vorangehenden Anforderung, die sich dadurch auszeichnet, daß das Befestigungsband (11) an beiden Enden mit einer Verschluß- bzw. Öffnungsvorrichtung für eine Mehrweganwendung (12,13) ausgestattet ist.

6. Vorrichtung entsprechend der Anforderung unter Punkt 5, die sich dadurch auszeichnet, daß die Verschluß- bzw. Öffnungsvorrichtung des Befestigungsbandes (11) aus den zwei zusammenpassenden Gegenstücken eines selbsthaftenden Klettverschlußes bestehen.

7. Vorrichtung gemäß einer beliebigen vorangehenden Anforderung, die sich dadurch auszeichnet, daß das Befestigungsband (11) elastisch ist.

8. Vorrichtung gemäß einer beliebigen vorangehenden Anforderung, die sich dadurch auszeichnet, daß Farben und Beschriftung (6, 7, 8, 9) auf die Etikette (1) aufgedruckt sind.

9. Vorrichtung gemäß einer beliebigen vorangehenden Anforderung, die sich dadurch auszeichnet, daß die Etikette (1) zwei Zonen für Notizen (10) vorsieht, auf denen mit den handelsüblichen Kugelschreibern und Filzmarkern handschriftliche Einträge gemacht werden können.
